# NEUE EUROPÄISCHE PATENTSCHRIFT

(11) **EP 1 927 488 B2**
(45) Veröffentlichungstag und Bekanntmachung des Hinweises auf die Entscheidung über den Einspruch: **05.01.2022**
(45) Hinweis auf die Patenterteilung: 26.03.2014
(21) Anmeldenummer: 07023085.9
(22) Anmeldetag: 28.11.2007
(51) Int. Cl.: B60H 1/22, F23L 5/02, F23D 5/00, F23Q 7/06, F24H 3/04, F23M 5/00

(54) **Fahrzeugheizgerät**
Vehicle heating device
Appareil de chauffage pour véhicule

(30) Priorität: 29.11.2006 DE 102006056369
(43) Veröffentlichungstag der Anmeldung: 04.06.2008
(73) Patentinhaber: Eberspächer Climate Control Systems GmbH, 73730 Esslingen (DE)
(72) Erfinder: Schmidt, Oliver, 73207 Plochingen (DE)
(74) Vertreter: Ruttensperger Lachnit Trossin Gomoll

(56) Entgegenhaltungen:
- WO-A1-2007/104271
- DE-A1- 2 432 850
- GB-A- 1 460 220
- US-A- 2 404 841
- US-A- 4 623 310

## Beschreibung

Die vorliegende Erfindung betrifft ein Fahrzeugheizgerät gemäß dem Oberbegriff des Anspruchs 1, wie es in Kraftfahrzeugen beispielsweise als Zuheizer oder Startheizung eingesetzt wird, um bei vergleichsweise niedrigen Umgebungstemperaturen durch Verbrennung eines Gemisches aus Brennstoff und Luft Wärme bereitzustellen. Dabei kommt auf Grund der steigenden Brennstoffpreise alternativen Brennstoffen, wie z.B. PME (Pflanzenmethylester), beispielsweise Rapsmethylester, immer größere Bedeutung zu. Da diese vermehrt auch als Kraftstoff für Brennkraftmaschinen in Fahrzeugen eingesetzt werden und im Allgemeinen brennstoffbetriebene Fahrzeugheizgeräte aus dem gleichen Tank und mithin mit dem gleichen Brennstoff gespeist werden, wie die Brennkraftmaschine in einem Fahrzeug, besteht auch für derartige Fahrzeugheizgeräte die Anforderung der Anpassung an derartige alternative Brennstoffe.

Ein Problem bei Fahrzeugheizgeräten, die an sich für Brennstoffe wie Diesel oder Benzin ausgelegt sind, ist, dass die im Bereich derjenigen Baugruppen, in welchen die Verbrennung stattfindet, vorhandene Temperatur so hoch ist, dass vor allem bei Einsatz von PME als Brennstoff in den Brennstoff führenden Baugruppen unerwünschte Reaktionen dieses Brennstoffs mit dem Luftsauerstoff auftreten können. Dies kann die Betriebslebensdauer derartiger Baugruppen beeinträchtigen und zu einem ungewünschten Verbrennungsverhalten führen.

Ein Fahrzeugheizgerät gemäß dem Oberbegriff des Anspruchs 1 ist aus der DE 24 32 850 A1 bekannt. Bei diesem Fahrzeugheizgerät ist ein Verbrennungsluftgebläse in einem eine Außenwand bereitstellenden Gehäuse angeordnet. In einem axialen Endbereich grenzt diese Außenwand unter Zwischenlagerung eines Isolierelements an eine Stirnfläche eines Wärmetauschergehäuses an. In das Wärmetauschergehäuse ist ein Brennkammergehäuse eingesetzt, welches im Wesentlichen einen eine Bodenwandung für die Brennkammer bereitstellenden Einsatz und damit verbunden ein eine Umfangswandung für die Brennkammer bereitstellendes Rohr umfasst.

Die US 4 623 310 A offenbart ein Fahrzeugheizgerät, bei welchem ein Brennkammergehäuse mit einem eine Umfangswandung bereitstellenden Gehäuseteil und einem eine Bodenwandung bereitstellenden Gehäuseteil aufgebaut ist. Das die Umfangswandung bereitstellende Gehäuseteil weist einen nach radial außen greifenden Flanschbereich auf, in welchem dieses axial angrenzend an ein Wärmetauschergehäuse positioniert ist und in welchem weiterhin das die Bodenwandung bereitstellende Gehäuseteil angeordnet ist. Ein Seitenkanalgebläse ist mit einem Gehäuse desselben angrenzend an das Brennkammergehäuse positioniert.

Es ist die Aufgabe der vorliegenden Erfindung, ein Fahrzeugheizgerät bereitzustellen, bei welchem die Temperatur derjenigen Baugruppen, in deren Bereich die Verbrennung stattfindet, gesenkt werden kann.

Erfindungsgemäß wird diese Aufgabe gelöst durch ein Fahrzeugheizgerät gemäß Anspruch 1. Dieses umfasst eine Brennkammerbaugruppe mit einem Brennkammergehäuse, das mit einem - bezogen auf eine Brennkammerlängsachse - nach radial außen greifenden Befestigungsbereich an einem Wärmetauschergehäuse festgelegt ist, wobei eine Außenwand einen das Brennkammergehäuse bereichsweise umgebenden Druckraum für in das Brennkammergehäuse einzuleitende Luft nach radial außen begrenzt, wobei die Außenwand an das Wärmetauschergehäuse angrenzt und im Angrenzungsbereich der Außenwand an das Wärmetauschergehäuse wenigstens in einem Umfangsbereich Trennmaterial mit geringerer Wärmeleitfähigkeit als das Wärmetauschergehäuse und die Außenwand angeordnet ist.

Das Wärmetauschergehäuse wird im Verbrennungsbetrieb durch die in dem von diesem umschlossenen Innenraum strömenden Verbrennungsabgase vergleichsweise stark erwärmt. Durch das Vorsehen des Trennmaterials zumindest in Bereichen zwischen dem Wärmetauschergehäuse und der Außenwand wird der Wärmeübertrag auf die Außenwand erschwert, so dass eine entsprechend starke Erwärmung derselben vermieden werden kann. Dies bringt den Vorteil mit sich, dass der Bereich, in welchen der flüssige Brennstoff und auch die in das Brennkammergehäuse zu fördernde Luft eingeleitet werden, weniger stark erwärmt wird und mithin die Gefahr von ungünstigen Reaktionen oder ungünstigen Verbrennungsbedingungen vor allem bei Einsatz von Brennstoffen wie PME gemindert werden kann.

Die Außenwand ist von dem Wärmetauschergehäuse getrennt ausgebildet und das Trennmaterial ist als im Wesentlichen ringartiges Trennelement zwischen der Außenwand und dem Wärmetauschergehäuse angeordnet. Zu diesem Zwecke ist das Wärmetauschergehäuse mit einer Stirnfläche ausgebildet, an welcher das Brennkammergehäuse mit seinem Befestigungsbereich festgelegt ist. Dabei ist auch die Außenwand radial außerhalb des Befestigungsbereichs unter Zwischenlagerung des Trennelements an der Stirnfläche des Wärmetauschergehäuses festgelegt.

Eine weitere Reduzierung des Temperaturniveaus wird dadurch erlangt, dass eine Abgabeöffnungsanordnung vorgesehen ist, durch welche ein Teil der in den Druckraum geförderten Luft nach außen unter Umgehung der Brennkammer abgegeben wird. Ein Teil der in den Druckraum eingeleiteten Luft wird also als Kühlluft verwendet, so dass durch die Abgabe nach außen, ohne vorher in die Brennkammer eingeleitet zu werden, Wärme aus dem Bereich des Brennkammergehäuses abtransportiert wird.

Eine weitere Reduzierung des Temperaturniveaus im Bereich des Brennkammergehäuses kann dadurch erlangt werden, dass an dem Brennkammergehäuse eine Aufnahmeaussparung für ein Zündorgan vorgesehen ist, wobei zwischen einer die Aufnahmeaussparung begrenzenden Oberfläche und einem Tragebereich des Zündorgans ein Durchtritt für in das Brennkammergehäuse zu leitende Luft gebildet ist, wobei der Tragebereich mit der Oberfläche an mehreren Berührunsbereichen in punktartigem oder linienartigem Tragekontakt steht.

Die vorliegende Erfindung wird nachfolgend mit Bezug auf die beiliegenden Zeichnungen detailliert beschrieben. Es zeigt:
- Fig. 1: einen Ausschnitt eines teilweise im Schnitt dargestellten Fahrzeugheizgerätes;
- Fig. 2: eine der Fig. 1 entsprechenden Ansicht einer nicht erfindungsgemäßen Ausgestaltungsform;
- Fig. 3: eine Schnittdarstellung eines bei dem Fahrzeugheizgerät der Fig. 2 vorhandenen Wärmetauschergehäuses, geschnitten längs einer Linie III - III in Fig. 2.

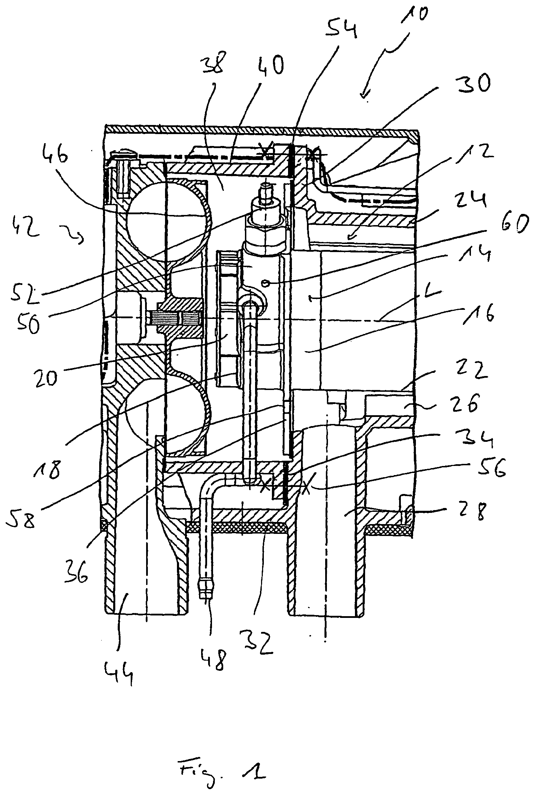

Das in Fig. 1 abschnittsweise dargestellte Fahrzeugheizgerät 10 umfasst als zentrale Baugruppe eine Brennkammerbaugruppe 12 mit einem Brennkammergehäuse 14. Dieses Brennkammergehäuse 14 wiederum ist aufgebaut mit einer Umfangswandung 16 und einer Bodenwandung 18, in welcher ein Lufteintrittsbereich mit einer Luftleiteinrichtung 20 zum Einleiten von zur Verbrennung erforderlicher Luft in eine im Brennkammergehäuse 14 gebildete Brennkammer vorgesehen ist. An das Brennkammergehäuse 14 bzw. die Umfangswandung 16 desselben schließt ein Flammrohr 22 an, entlang welchem die bei der Verbrennung in der Brennkammer entstehenden Verbrennungsabgase strömen. An einem in der Fig. 1 nicht dargestellten offenen Ende treten die Verbrenungsabgase aus dem Flammrohr aus und strömen zurück entlang der Außenseite des Flammrohrs 22 in einen zwischen dem Flammrohr 22 und einem Brennkammergehäuse 24 gebildeten Abgasströmungsraum 26. Ein Abgabestutzen 28 führt die Verbrennungsabgase aus dem Abgasströmungsraum 26 heraus und zu einem Abgasführungssystem bzw. zur Umgebung.

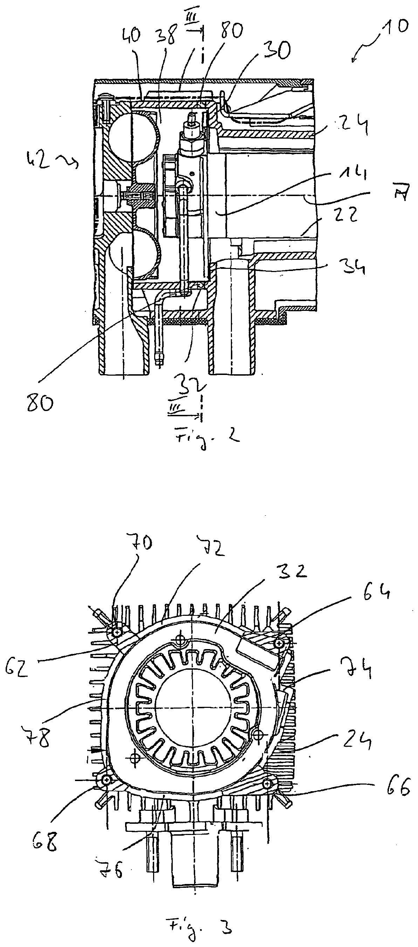

In seinem im Bereich des Brennkammergehäuses 14 liegenden Bereich weist das Wärmetauschergehäuse 24 eine stufenartige, radiale Erweiterung 30 mit einer daran gebildeten Stirnfläche 32 auf. An dieser Stirnfläche liegt unter Zwischenlagerung eines Zwischenlagerelements 34 ein nach radial außen greifender, ringartiger bzw. flanschartiger Befestigungsbereich 36 des Brennkammergehäuses 14 an. Dieser erstreckt sich von der Umfangswandung 16 und ist beispielsweise integral mit dieser ausgebildet. Durch eine Mehrzahl nicht dargestellter Befestigungsbolzen, beispielsweise Schraubbolzen, ist der Befestigungsbereich 36 an der stufenartigen Erweiterung 30 des Wärmetauschergehäuses 24 befestigt. Auf diese Art und Weise ist durch diesen Befestigungsbereich 36 der Abgasströmungsraum 26 von einem das Brennkammergehäuse bzw. die Umfangswandung 16 und den Bodenbereich 18 umgebenden Druckraum 38 getrennt. Nach radial außen, radial bezogen auf eine Brennkammerlängsachse L, ist der Druckraum 38 begrenzt durch eine Außenwand 40, die in dem in Fig. 2 dargestellten Beispiel integral ausgebildet ist mit dem Wärmetauschergehäuse 24 und an den radial äußeren Bereich der stufenartigen Erweiterung 30 anschließt.

An dem von der stufenartigen Erweiterung 30 entfernt liegenden Ende der Außenwand 40 ist mit dem Wärmetauschergehäuse 24 ein Gebläse 42, z.B. Seitenkanalgebläse, verbunden. Dieses nimmt die in den Druckraum 38 einzuleitende Luft im Bereich einer Ansaugöffnung 44 auf und gibt es unter der Förderwirkung eines Förderrads 46 in den Druckraum 38 ab. Durch das Gebläse 42 ist also der Druckraum 38 an seinem von dem Abgasströmungsraum 26 entfernten Ende axial abgeschlossen.

Um im Brennkammergehäuse 14 bzw. der darin gebildeten Brennkammer ein verbrennungsfähiges Gemisch mit der in den Druckraum 38 eingeleiteten und über die Luftleiteinrichtung 20 in die Brennkammer geführten Luft zu erzeugen, führt eine Zuführleitung 48 durch den Druckraum 38 und die Umfangswandung 16 des Brennkammergehäuses 14 hindurch und speist den zunächst flüssigen Brennstoff, also beispielsweise Pflanzenmethlyester, in das Brennkammergehäuse 14 ein. Dort kann ein poröses Verdampfermedium vorgesehen sein, das den flüssigen Brennstoff aufnimmt, durch Kapillarförderwirkung verteilt und zur Brennkammer abdampft, um das Gemisch aus Luft Brennstoffdampf zu erzeugen.

Weiterhin ist an dem Brennkammergehäuse 14 ein an der Umfangswandung 16 nach außen sich weg erstreckender Zündorganaufnahmeansatz 50 vorgesehen. Dieser näherungsweise tangential von der Umfangswandung 16 sich weg erstreckende Zündorganaufnahmeansatz trägt ein in der Fig. 1 nur mit seinem außerhalb dieses Ansatzes sich erstreckenden, rückwärtigen Teil dargestelltes Zündorgan 52, beispielsweise einen Glühzündstift. Durch Erregung desselben werden im Zündorganaufnahmeansatz lokal derart hohe Temperaturen erzeugt, dass das dort vorhandene Gemisch aus Luft und Brennstoffdampf zündet und somit die Verbrennung gestartet wird.

Man erkennt in Fig. 1, dass die Außenwand 40 als von dem Brennkammergehäuse separat ausgeführte Baugruppe bereitgestellt ist, die in einem dem Brennkammergehäuse 14 nahe liegenden Bereich unter Zwischenlagerung eines ringartigen Trennelements 54 an der Stirnfläche 32 in einem Bereich radial außerhalb des Befestigungsbereichs 36 bzw. des Zwischenlagerelements 34 anliegt. In diesem Bereich ist die Außenwand 40 durch mehrere nur andeutungsweise gezeigte Befestigungsbolzen 56, beispielsweise Schraubbolzen, mit dem Wärmetauschergehäuse 24 fest verbunden.

Durch diese getrennte Ausführung und die Zwischenlagerung des Trennelements 54 wird eine weitgehende thermische Entkopplung der Außenwand 40 von dem im Verbrennungsbetrieb sich vergleichsweise stark erwärmenden Wärmetauschergehäuse 24 erzielt. Dies bedeutet, dass durch den verminderten Wärmeeintrag in die Außenwand 40 auch von der Außenwand 40 weniger Wärme abgegeben wird, beispielsweise auf die im Druckraum 38 vorhandene Luft und mithin das Temperaturniveau von Baugruppen, die in dem Bereich angeordnet sind, in welchem auch die Verbrennung abläuft, gesenkt werden kann. Dies betrifft insbesondere auch die Zuführleitung 48 für den flüssigen Brennstoff.

Als Aufbaumaterial für das Trennelement 54 kann beispielsweise Keramikmaterial, den thermischen Anforderungen gerecht werdendes Gummimaterial oder dergleichen eingesetzt werden. Von Bedeutung ist, dass der Wärmeleitkoeffizient des Aufbaumaterials des Trennelements 54 geringer ist, als derjenige des im Allgemeinen aus Gussmetall gefertigten Wärmetauschergehäuses 24 und der im Allgemeinen ebenfalls aus Metall aufgebauten Außenwand 40.

Eine weitere Reduzierung des Temperaturniveaus im Bereich der Außenwand 40 bzw. des Brennkammergehäuses 14 wird dadurch erlangt, dass ein Teil der in den Druckraum 38 eingeleiteten Luft nicht in das Brennkammergehäuse 14 weitergeleitet wird, um dort mit Brennstoffdampf vermischt und verbrannt zu werden, sondern nach Umströmung des Brennkammergehäuses 14 nach außen abgegeben wird. Hierzu kann beispielsweise im Befestigungsbereich 36 eine oder mehrere Durchtrittsöffnungen 58 vorgesehen sein, die eine direkte Verbindung zwischen dem Druckraum 38 und dem Abgasströmungsraum 26 herstellt. Auf diese Art und Weise kann Luft, welche Wärme vom Brennkammergehäuse 14 und beispielsweise auch dem den Druckraum 38 durchsetzenden Bereich der Zuführleitung 48 aufgenommen hat, direkt nach außen abgegeben werden. Es ist selbstverständlich, dass derartige Durchtrittsöffnungen auch in der Außenwand 40 vorgesehen sein können. Eine weitere Absenkung des Temperaturniveaus insbesondere im Bereich des Zündorganaufnahmeansatzes 50 kann dadurch realisiert werden, dass das in diesem Zündorganaufnahmeansatz 50 angeordnete und bezüglich diesem durch einen Tragebereich getragene Zündorgan 52 mit einer Innenoberfläche des Zündorganaufnahmeansatzes 50 lediglich in linienartigem oder punktartigem Kontakt steht. Dies kann beispielsweise dadurch realisiert werden, dass der Tragebereich des Zündorgans 53, welcher in dem Zündorganaufnahmeansatz 50 mit kreisrunder bzw. zylindrischer Innenoberfläche angeordnet ist, eine vieleckartige Umfangskontur, beispielsweise eine dreieckartige Umfangskontur, aufweist und im Bereich der Ecken somit in linienartigem Kontakt mit der Innenoberfläche des Zündorganaufnahmeansatzes 50 steht. Zwischen diesen Berührungsbereichen ist dann ein Durchtritt gebildet, in welchem die beispielsweise im Bereich einer oder mehrerer Öffnungen 60 aus dem Druckraum 38 in den Zündorganaufnahmeansatz 50 strömende Luft dann auch in Richtung zur Brennkammer strömen kann.

Eine nicht erfindungsgemäße Ausgestaltungsform ist in den Fig. 2 und 3 gezeigt. Bei dieser Ausgestaltungsform ist die Außenwand 40 mit dem Wärmetauschergehäuse 24 grundsätzlich integral, beispielsweise in einem Metallgussverfahren hergestellt. Dabei sind an der Außenseite der Außenwand 40 mehrere Stege 62, 64, 66, 68 gebildet, welche sich näherungsweise über die gesamte axiale Erstreckungslänge der Außenwand 40 erstrecken und welche jeweils eine Öffnung 70 aufweisen. Diese Öffnung 70 kann mit Innengewinde versehen sein und zur Aufnahme eines Befestigungsbolzens für das Gebläse 42 dienen. In Umfangrichtung zwischen den Stegen 62, 64, 66, 68 ist an einem der stufenartigen Erweiterung 30 nahe liegenden Bereich der Außenwand 40 jeweils eine Aussparung 72, 74, 76, 78 gebildet, welche sich vorzugsweise für die gesamte Dicke der Außenwand 40 erstreckt, so dass eine Verbindung dieser Außenwand 40 mit der stufenartigen Erweiterung 30 bzw. dem verbleibenden Teil des Wärmetauschergehäuses 24 lediglich im Bereich der Stege 62, 64, 66, 68 realisiert ist. In diesen Aussparungen 72, 74, 76, 78 ist zum Abschließen des Druckraums 38 Trennmaterial 80 angeordnet, das wiederum einen geringeren Wärmeleitkoeffizienten aufweist, als das Aufbaumaterial des Wärmetauschergehäuses 24 bzw. der Außenwand 40. Somit ist in weiten Bereichen ein Wärmeübertrag zwischen den in axialer Richtung jeweils an beiden Seiten der Aussparungen 72, 74, 76, 78 liegenden Bereichen des Wärmetauschergehäuses 24 bzw. der Außenwand 40 unterbunden. Lediglich im Bereich der Stege 62, 64, 66, 68 sind hier Wärmeübertragungsbrücken vorhanden.

Es ist selbstverständlich, dass bei entsprechender Stabilitätsanforderung die Aussparungen bzw. zumindest ein Teil der Aussparungen 72, 74, 76, 78 so ausgebildet sein können, dass diese sich nicht über die gesamte Dicke der Außenwand 40 erstrecken, so dass lediglich an der Außenseite oder der Innenseite der Außenwand 40 nutartige Einsenkungen gebildet sind, die dann erforderlichenfalls mit dem Trennmaterial gefüllt werden können.

## Patentansprüche

1. Fahrzeugheizgerät, umfassend eine Brennkammerbaugruppe (12) mit einem Brennkammergehäuse (14), wobei eine Außenwand (40) einen Druckraum (38) für in das Brennkammergehäuse (14) einzuleitende Luft nach radial außen begrenzt, wobei die Außenwand (40) an ein Wärmetauschergehäuse (24) angrenzt und im Angrenzungsbereich der Außenwand (40) an das Wärmetauschergehäuse (24) wenigstens in einem Umfangsbereich Trennmaterial (54; 80) mit geringerer Wärmeleitfähigkeit als das Wärmetauschergehäuse (24) und die Außenwand (40) angeordnet ist, wobei die Außenwand (40) von dem Wärmetauschergehäuse (24) getrennt ausgebildet ist und das Trennmaterial (54) als im Wesentlichen ringartiges Trennelement zwischen der Außenwand (40) und dem Wärmetauschergehäuse (24) angeordnet ist
**dadurch gekennzeichnet,**
- **dass** das Brennkammergehäuse (14) mit einem - bezogen auf eine Brennkammerlängsachse (L) - nach radial außen greifenden Befestigungsbereich (36) an dem Wärmetauschergehäuse (24) festgelegt ist,
- **dass** der Druckraum (38) das Brennkammergehäuse (14) bereichsweise umgibt,
- **dass** das Wärmetauschergehäuse (24) an einer stufenartigen, radialen Erweiterung (30) eine Stirnfläche (32) aufweist, an welcher das Brennkammergehäuse (14) mit dem Befestigungsbereich (36) festgelegt ist,
- **dass** die Außenwand (40) radial außerhalb des Befestigungsbereichs (36) unter Zwischenlagerung (54) des Trennelements an der Stirnfläche (32) des Wärmetauschergehäuses (24) festgelegt ist, und
- **dass** eine Abgabeöffnungsanordnung vorgesehen ist, durch welche ein Teil der in den Druckraum (38) geförderten Luft nach außen unter Umgehung der Brennkammer abgegeben wird.

2. Fahrzeugheizgerät nach einem der Ansprüche 1,
**dadurch gekennzeichnet, dass** an dem Brennkammergehäuse (14) eine Aufnahmeaussparung für ein Zündorgan (52) vorgesehen ist, wobei zwischen einer die Aufnahmeaussparung begrenzenden Oberfläche und einem Tragebereich des Zündorgans (52) ein Durchtritt für in das Brennkammergehäuse (14) zu leitende Luft gebildet ist, wobei der Tragebereich mit der Oberfläche an mehreren Berührungsbereichen in punktartigem oder linienartigem Tragekontakt steht.

## Claims

1. A vehicle heating device, comprising a combustion chamber assembly (12) with a combustion chamber housing (14), wherein an external wall (40) defines a pressure room (38) for air to be inserted into said combustion chamber housing (14) radially to the outside, wherein the external wall (40) is adjacent to a heat exchanger housing (24), and wherein separating material (54; 80) with a lower thermal conductivity than the heat exchanger housing (24) and the external wall (40) is arranged at least in a circumferential region of the abutment region of said external wall (40) to said heat exchanger housing (24), wherein the external wall (40) is designed separately from said heat exchanger housing (24) and wherein said separating material (54) is arranged as a substantially annular separating element between said external wall (40) and said heat exchanger housing (24),
**characterized in that**
- said combustion chamber housing (14) is attached with an attachment section (36) engaging radially outwards - in relation to a combustion chamber longitudinal axis (L) - at the heat exchanger housing (24),
- the pressure room (38) partly surrounds said combustion chamber housing (14),
- said heat exchanger housing (24) comprises at a step-like radial extension (30) a front surface (32) wherein the combustion chamber housing (14) is attached with the attachment section,
- said external wall (40) is attached radially outward said attachment section (36) with an intermediate arrangement (54) of said separating element at the front surface (32) of said heat exchanger housing (24), and
- a discharge opening arrangement is provided, through which part of the air transported into the pressure room (38) is discharged to the outside bypassing the combustion chamber.

2. The vehicle heating device according to one of claims 1,
**characterized in that** a receiving recess for an ignition element (52) is provided at said combustion chamber housing (14), wherein a passage for air to be inserted into said combustion chamber housing (14) is formed between a surface defining said receiving recess and a support section for the ignition element (52), wherein the support section is in point-type or line-type support contact with the surface.

## Revendications

1. Un dispositif de chauffage pour un véhicule, comprenant un module de chambre de combustion (12) avec un boîtier de chambre de combustion (14), dans lequel une paroi externe (40) définit radialement vers l'extérieur un espace de pression (38) pour l'air à être insérée dans la chambre de combustion (14), dans lequel la paroi externe (40) avoisine un boîtier d'échangeur de chaleur (24) et dans lequel du matériau de séparation (54 ; 80) avec une conductivité thermale moins importante que celle du boîtier d'échangeur de chaleur (24) et de la paroi externe (40) est arrangé au moins dans une région circonférentielle dans la région avoisinante de la paroi externe (40) au boîtier d'échangeur de chaleur (24),
**caractérisé en ce que**
- le boîtier de chambre de combustion (14) est attaché au boîtier d'échangeur de chaleur (24) avec une région d'attachement (36) saisissant radialement vers l'extérieur - en relation à un axe longitudinal de la chambre de combustion (L) -
- l'espace de pression (38) entoure partiellement le boîtier de chambre de combustion (14),
- le boîtier d'échangeur de chaleur (24) comprend une surface frontale (32) à une extension radiale étagée (30), sur laquelle le boîtier de chambre de combustion (14) est attaché avec la région d'attachement (36),
- la paroi externe (40) est attachée radialement à l'extérieur de la région d'attachement (36) avec un arrangement intermédiaire (54) de l'élément de séparation à la surface frontale (32) du boîtier d'échangeur de chaleur (24), et
- un arrangement d'ouverture de décharge est prévu, à travers laquelle une partie de l'air transporté dans l'espace de pression (38) est déchargée vers l'extérieur en contournant la chambre de combustion.

2. Le dispositif de chauffage selon une des revendications 1,
**caractérisé en ce qu'**une encoche de réception pour un élément d'allumage (52) est prévue au boîtier de chambre de combustion (14), dans lequel un passage pour l'air à insérer dans le boîtier de chambre de combustion (14) est formé entre une surface définissant l'encoche de réception et une section de support de l'élément d'allumage (52), la section de support étant en contact de support ponctuel ou linéaire avec la surface dans plusieurs régions de contact.
